# FASCICULE DE BREVET EUROPEEN

(11) **EP 2 505 323 B1**
(45) Date de publication et mention de la délivrance du brevet: **26.02.2014**
(21) Numéro de dépôt: 12162885.3
(22) Date de dépôt: 02.04.2012
(51) Int. Cl.: A01N 33/02, B27K 3/34, B27K 3/50, B27K 3/00

(54) **Composition pour le traitement du bois**
Zusammensetzung für die Holzbehandlung
Composition for treating wood

(30) Priorité: 31.03.2011 FR 1152676
(43) Date de publication de la demande: 03.10.2012
(73) Titulaire: Berkem, 24680 Gardonne (FR)
(72) Inventeur: Kennouche, Daouïa, 69800 SAINT-PRIEST (FR); Fahy, Olivier, 24100 LEMBRAS (FR)
(74) Mandataire: Coquel, Jean-Marc

(56) Documents cités:
- EP-A1- 1 813 401
- WO-A1-2005/005114
- US-A1- 2006 086 284
- US-A1- 2007 227 399

## Description

La présente invention concerne une composition pour le traitement du bois. Elle concerne également l'utilisation de cette composition pour le traitement du bois ou de matériaux dérivés du bois.

Le bois ou les matériaux dérivés du bois sont sujets à différentes altérations de surfaces susceptibles de se propager à l'ensemble du substrat. Ces dégradations sont de natures biologiques, physiques ou chimiques.

Ainsi les altérations liées aux insectes xylophages, aux termites ou aux champignons lignivores exigent un traitement insecticide ou fongicide parfois couplé à une hydrofugation.

De même, les remontées de tanins propres aux bois feuillus peuvent êtres maîtrisées grâce à l'application de préparations adaptées.

Ces différentes propriétés conférées au matériau peuvent êtres ou non combinées à des traitements ignifuges ou retardateurs de feu ainsi qu'à des agents de protection contre les rayonnements ultraviolets (UV) de la lumière du jour.

Ces derniers sont particulièrement importants car il est connu que le bois est dégradé lorsqu'il est exposé à la lumière. Cette dégradation consiste notamment en un changement de couleur du bois.

Ainsi, on a observé que les rayonnements ultraviolets associés à des expositions répétées à l'eau de bois recouverts d'une finition transparente (vernis ou lasure) sont les principales sources de dégradation de la surface d'un bois utilisé en extérieur.

La vitesse de dégradation des finitions est toutefois déterminée par différents paramètres tels que:
- la température,
- la pureté du liant de la finition,
- l'épaisseur ou la section du matériau,
- la présence d'agents matifiants.

Pour limiter la dégradation du bois à la lumière, de nombreuses substances capables d'absorber les rayonnements UV ont été développées ces dernières décennies.

Il est en effet impératif dans l'industrie du bois de pouvoir garantir une certaine pérennité de l'aspect de surface d'un objet ou ouvrage en bois recouvert d'une finition transparente.

On connaît ainsi des absorbeurs ultraviolets qui sont des composés stables fortement absorbants dans l'ultraviolet, notamment dans la plage de rayonnement 280-400 nm. L'énergie nocive du rayonnement ultraviolet est absorbée par ces composés et restituée sous forme de chaleur.

L'addition de ces composés améliore la stabilité à la lumière de la finition mais également celle des colorants introduits. De plus, ils ralentissent le jaunissement.

On connaît également des antioxydants, ou encore anti-radicaux libres, qui sont des composés n'absorbant pas la lumière solaire et ne pouvant pas jouer le rôle d'inhibiteurs mais qui vont immédiatement stopper l'auto-oxydation. Ils assurent ainsi une bonne protection des liants sensibles à l'oxydation.

On pourra notamment citer comme antioxydants, les amines à empêchement stérique (AES) ou en anglais "hindered amine light stabilizer" (HALS).

On connaît encore des pigments absorbants ou fortement réfléchissants dans l'ultraviolet. C'est le cas des noirs de carbone, qui sont de bons antioxydants et qui présentent également une forte absorption dans l'ultraviolet, ce qui les rend particulièrement intéressants quand la coloration noire est possible. Les oxydes de titane sont des absorbeurs ultraviolets efficaces, mais ils induisent l'oxydation des milieux dans lesquels ils sont dispersés, provoquant la destruction superficielle des surfaces exposées à la lumière (photolyse).

Cependant, ces pigments sont des particules solides qui sont insolubles dans l'eau et la taille de ces particules étant de l'ordre du micromètre, ils peuvent avoir un effet négatif sur la texture de la composition dans laquelle ils sont ajoutés.

Enfin, une autre stratégie de protection consiste à utiliser des inhibiteurs, c'est-à-dire des substances organiques capables de désactiver les états excités électroniques créés par les radiations ultraviolettes avant qu'une réaction nuisible n'ait lieu.

Les principaux composés de ce type sont des complexes de nickel mais leur innocuité, et donc leur utilisation, ont été mises en cause.

On constate aujourd'hui que pour traiter efficacement un bois à la fois contre les rayonnements ultraviolets et contre les champignons, insectes et termites, il faut appliquer sur ce bois plusieurs produits distincts.

Par ailleurs, les applications de ces produits peuvent être réalisées sous différentes combinaisons.

Ainsi, et typiquement, on peut réaliser la protection d'un objet ou ouvrage en bois selon les stratégies suivantes :
- une application d'un antioxydant (AES), puis une application d'un produit de traitement fongicide et/ou insecticide et enfin une à deux applications d'une finition contenant un absorbeur ultraviolet,
- une application d'un antioxydant (AES), puis une application d'un produit de traitement fongicide et/ou insecticide et enfin une à deux applications d'une finition contenant un absorbeur ultraviolet et un antioxydant (AES).

Alors qu'un antioxydant est imprégné directement dans le bois selon une première étape de traitement, un absorbeur ultraviolet et éventuellement, un antioxydant (AES) sont incorporés dans les formulations de vernis ou de lasures appliquées en finition.

Il ressort clairement de ces exemples que trois étapes distinctes sont requises pour traiter fongicide/insecticide et contre les rayonnements UV un ouvrage ou une pièce de bois ou constitués de matériaux dérivés du bois.

Ces étapes distinctes résultent de l'incompatibilité chimique totale qui existe entre les dispersions aqueuses à PH basique contenant un antioxydant et un absorbeur ultraviolet, d'une part, et les insecticide et fongicide d'autre part.

Or, ces trois étapes de traitement non seulement immobilisent des installations mais sont longues et fastidieuses à réaliser pour les opérateurs.

Ces étapes de traitement sont, par conséquent, coûteuses et vont à l'encontre des intérêts économiques des sociétés exploitantes.

De plus, l'efficacité des formulations aqueuses traitantes du bois dépend naturellement de leurs caractéristiques et performances intrinsèques mais également du respect des quantités mises en oeuvre.

Au-delà de ces paramètres, l'homogénéité de l'application et le recouvrement intégral de la surface du support à protéger sont des critères fondamentaux de réussite.

Il est fréquent que lors d'une application par pulvérisation d'un traitement préventif des bois de menuiseries, certaines parties de l'ouvrage échappent au traitement du fait des angles de projection.

De même lors de la réalisation des éléments de menuiseries, il est fréquent que les pièces de bois préalablement traitées subissent des coupes d'ajustement dont il est impératif que les surfaces soient également traitées.

Dans ces domaines, tout manque ne peut que conduire qu'à l'échec du traitement, l'objectif recherché n'étant alors pas atteint.

Aujourd'hui, le contrôle du traitement de ces surfaces ne se réalise, au mieux, qu'avec difficulté. En effet, les formulations appliquées sont incolores pour d'évidentes raisons d'esthétique ou par nécessité technique.

De plus, les produits utilisés sont la plupart du temps formulés en phase aqueuse. Ce vecteur s'évapore rapidement et ne laisse pas de trace ni de coloration particulière sur les surfaces traitées, ce qui en rend le contrôle visuel impossible au terme de cette évaporation.

Les documents US 2007/227399 A1, WO 2005/005114 A1 et EP 1 813 401 A1 décrivent une composition pour le traitement du bois connue, comprenant un fongicide, un insecticide, un agent pour absorber les rayons UV et une amine encombrée.

L'objectif de la présente invention est donc de proposer une composition pour le traitement du bois, qui soit simple dans sa conception et son mode opératoire, économique, permettant de traiter en une seule étape les bois à la fois en fongicide et/ou insecticide et contre les rayonnements ultraviolets tout en assurant une durabilité des bois ainsi traités.

Un autre objet de la présente invention est une composition pour le traitement du bois qui autorise un contrôle non destructif et rapide de la qualité et de l'uniformité de son application sur une pièce de bois à protéger.

Par ailleurs, cette composition pour le traitement du bois doit être compatible avec les lasures (acryliques, alkydes, polyuréthane, etc.) connus de l'état de l'art et disponibles sur les marchés des vernis et lasures pour bois.

A cet effet, l'invention concerne une composition pour le traitement du bois ou de matériaux dérivés du bois, cette composition comportant au moins un insecticide et/ou au moins un fongicide.

Selon l'invention, cette composition comprend en outre au moins un agent de filtrage capable d'absorber les rayonnements UV et une ou plusieurs amines stériquement encombrées. De plus, les particules d'insecticide et/ou de fongicide dans ladite composition aqueuse ont une taille moyenne inférieure à 100 pm, cette composition étant une émulsion aqueuse ou une microémulsion aqueuse ou encore une solution aqueuse.

De manière avantageuse, les additifs allongeurs de durée de vie que sont le ou les absorbeurs ultraviolets et le ou les anti-radicaux libres sont intégrés dans la composition pour le traitement du bois sans modifier, ni altérer négativement les propriétés de l'insecticide et/ou du fongicide.

L'introduction de ce ou ces absorbeurs ultraviolets et de ce ou ces anti-radicaux libres directement dans la composition pour le traitement du bois permet également de satisfaire les avantages recherchés quant au coût et à la facilité de mise en oeuvre de la composition.

Cette introduction permet ainsi de réaliser un gain substantiel de temps lors du traitement de bois de structure et de parement de constructions industrielles ou d'habitation, de bois de menuiserie, de bardages en usage préventif.

Il est du mérite de la demanderesse d'être parvenue à déposer en une seule étape de traitement à l'aide de la présente composition, sur du bois ou des matériaux dérivés du bois, au moins un additif allongeur de durée de vie du bois, un insecticide et/ou un fongicide.

En effet, l'une des difficultés de cette démarche était de vaincre le préjugé bien établi dans son domaine technique que l'intégration d'un additif allongeur de durée de vie à une composition de traitement du bois comprenant un insecticide et/ou un fongicide conduirait inévitablement à la déstabilisation de la stabilité chimique de cette composition, et par conséquent à rendre cette dernière inefficace.

De plus, grâce à la composition de la présente invention, une ou plusieurs couches de finition peuvent ensuite être appliquées sur les bois ainsi traités sans que ces couches de finition requièrent l'incorporation d'un absorbeur ultraviolet.

Cette composition peut être liquide ou sous forme d'un gel.

A titre d'exemple, l'agent insecticide est choisi dans la famille des pyréthrinoïdes, des néonicotinoïdes ou encore d'autres familles d'insecticides telles que les carbamates...

A titre purement illustratif, on pourra choisir cet insecticide dans le groupe comprenant la Bifenthrine, l'alpha-cyperméthrine, la cyperméthrine, la perméthrine, l'etofenprox, l'imidacloprid, le thiacloprid.

De préférence, le fongicide est un fongicide organique ou encore mieux une combinaison de différents fongicides organiques.

De préférence, les amines stériquement encombrées (AES) sont choisies parmi des dérivés de tétraméthyle piperidine.

On entend par "agent de filtrage capable d'absorber les UV", un composé organique ou un composé minéral absorbant les radiations UV-A et/ou UV-B.

De préférence, cet agent de filtrage absorbe les radiations ultraviolettes dans le spectre compris entre 280 nm et 500 nm, et encore mieux dans le spectre entre 300 nm et 415 nm.

A titre purement illustratif, cet agent de filtrage peut être des dérivés de trois composés suivants :
- l'hydroxybenzophénone, et par exemple, les dérivés 4-hydroxy, 4-methoxy, 4-octyloxy, 4-decyloxy, 4-dodecyloxy, 4-benzyloxy, 4,2',4'-trihydroxy et 2'-hydroxy-4,4'-dimethoxy,
- l'hydroxyphénylbenzotriazole, et par exemple, le 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole,2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl-2'-hydroxy-5'-methylphenyl)-5-chloro-benzotriazole,2-(3'-sec-butyl-5'-tert-butyl-2'-hydroxyphenyl)benzotriazole,2-(2'-hydroxy-4'-octyloxyphenyl) benzotriazole, 2-(3', 5'-di-tert-amyl-2'-hydroxyphenyl) benzotriazole, 2-(3',5'-bis-(α, α -dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyl-oxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole,
- l'hydroxyphenyltriazine, et par exemple, le 2-(2-Hydroxyphenyl)-1,3,5-triazine tel que 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4, 6-bis (2, 4-dimethylphenyl)- 1,3, 5-triazine,

Dans différents modes de réalisation particuliers de cette composition pour le traitement du bois, chacun ayant ses avantages particuliers et susceptibles de nombreuses combinaisons techniques possibles:
- ladite ou lesdites amines stériquement encombrées ont un poids moléculaire inférieur ou égal à 1000 g/mol de manière à migrer de l'intérieur du bois ainsi traité vers la surface externe de ce bois pour renouveler en permanence sa protection,
- le pourcentage de l'ensemble comprenant ledit au moins un agent de filtrage capable d'absorber les rayonnements UV et ladite au moins une amine stériquement encombrée, dans ladite composition est compris entre 0,1 pourcent et 20 pourcents en poids par rapport au poids total de la composition,

De préférence, la composition aqueuse comporte une part d'absorbeur UV pour quatre (4) parts d'amine stériquement encombrée (AES) soit un ratio Absorbeur UV/AES = ¼ (en poids).
- cette composition comprend au moins un agent tensio-actif, au moins un de ces agents tensio-actifs comprenant l'éther monobutylique de polyéthylène-polypropylène glycol ("polyethylene-polypropylene glycol monobutyl ether").

Cet agent tensio-actif permet avantageusement d'obtenir une composition pour le traitement du bois ou de matériaux dérivé du bois qui est libre de tout polymère - corps chimique formé par polymérisation, de paraffine ou encore de cire, qui ont des tailles de particules importantes. La stabilité de la présente composition résulte du ou des agents tensio-actifs ajoutés à l'insecticide et/ou le fongicide respectivement préalablement dissous ou dilués dans un solvant organique pour préparer la composition aqueuse comprenant l'insecticide et/ou le fongicide. Ces agents tensio-actifs permettent de stabiliser l'ajout du couple amine stériquement encombrée/absorbeur UV sans ajouter de composé ayant une taille de particules supérieures à celle du ou celles des agents tensio-actifs.
- cette composition comprend au moins un des éléments suivants : un hydrofuge, un agent ignifuge, un retardateur de feu, un colorant, un agent de conservation, un agent fluorescent pour produire une fluorescence lorsque ladite composition est soumise à un rayonnement lumineux et des combinaisons de ceux-ci,

A titre purement illustratif, l'agent ignifugeant choisi parmi les composés à base de bore, à base de phosphore et/ou azote, et encore mieux parmi les composés azotés et phosphatés.

De préférence, l'agent ignifugeant sera choisi parmi le groupe comprenant un composé à base d'azote et de phosphate ou de polyphosphate ou de phosphinate ou encore de leurs sels.

A titre d'exemple, l'hydrofuge pourra être choisi parmi les composés à base de silanes ou les composés siliconés ou fluorés.

Avantageusement, ledit au moins un agent fluorescent absorbe dans le spectre compris entre 300 nm et 500 nm, et encore mieux dans l'UVA entre 350 nm et 415 nm, en réémettant entre 400 et 525 nm.

Le pourcentage de cet agent fluorescent dans ladite composition est par exemple inférieur à 5 pourcents en poids, et encore mieux compris entre 0,01 et 1 pourcent en poids par rapport au poids total de ladite composition.

De préférence, ledit au moins un agent fluorescent est un azurant optique.

A titre purement illustratif, ladite composition peut comprendre un composé de la famille des azurants optiques et au moins un deuxième agent fluorescent qui n'appartient pas à cette famille.

Cet azurant optique est de préférence choisi parmi les dérivés du stilbène, les dérivés coumariniques, les dérivés oxazole et benzoxazole, les dérivés de naphthalimide, les dérivés de pyrène et les dérivés de pyrazoline.

Encore mieux, ledit au moins un azurant optique est choisi parmi les dérivés du stilbène, les dérivés benzoxazole et les dérivés de naphthalimide de manière à ne pas modifier l'état physique de la composition lors de son ajout.

La présente invention concerne également un procédé de préparation d'une composition aqueuse pour le traitement du bois ou de matériaux dérivés du bois tel que décrit précédemment.

Selon l'invention, ce procédé comprend une phase de mélange d'une émulsion aqueuse à pH basique comprenant au moins un agent de filtrage capable d'absorber les rayonnements UV et une ou plusieurs amines stériquement encombrées, avec une composition aqueuse comprenant au moins un insecticide et/ou au moins un fongicide, les particules d'insecticide et/ou de fongicide dans ladite composition aqueuse ayant une taille moyenne inférieure à 100 µm.

Avantageusement, on réalise les étapes suivantes pour préparer ladite composition aqueuse comprenant au moins un insecticide et/ou au moins un fongicide :
a) on dissout ou on dilue ledit au moins un insecticide et/ou au moins un fongicide dans un solvant organique, et
b) on ajoute au moins un agent tensio-actif, au moins un de ces agents tensio-actifs comprenant l'éther monobutylique de polyéthylène-polypropylène glycol.

A titre purement illustratif, à l'étape b) de la méthode de préparation de la composition aqueuse comportant comprenant au moins un insecticide et/ou au moins un fongicide, on peut ajouter un couple d'agents tensio-actifs comprenant l'éther monobutylique de polyéthylène-polypropylène glycol ("polyethylene-polypropylene glycol monobutyl ether") et un agent tensio-actif non ionique tel qu'un alcool gras éthoxylé ou une huile de ricin éthoxylée.

De préférence, on incorpore dans une composition aqueuse comprenant au moins un insecticide et/ou au moins un fongicide sous simple agitation de l'émulsion à pH basique comprenant au moins un agent de filtrage capable d'absorber les rayonnements UV et une ou plusieurs amines stériquement encombrées.

De préférence, le pH de cette émulsion aqueuse est compris entre 7 et 9 à température ambiante. Un pH de 9 est le maximum toléré pour l'émulsion comprenant au moins un agent de filtrage capable d'absorber les rayonnements UV et une ou plusieurs amines stériquement encombrées afin de garantir que le mélange total avec la composition aqueuse comprenant au moins un insecticide et/ou au moins un fongicide, soit stable.

La présente invention concerne encore l'utilisation d'une composition pour le traitement du bois telle que décrite précédemment pour le traitement du bois.

De préférence, on utilise cette composition pour le traitement d'au moins la menuiserie d'un bâtiment.

Cette composition peut également être mise en oeuvre pour traiter des bois de structure et de parement de constructions industrielles ou d'habitation, des bardages en usage préventif.

Selon un mode de réalisation particulier de la présente invention, on incorpore à température ambiante ou à une température inférieure ou égale à 50°C, dans une microémulsion aqueuse comprenant un insecticide et un fongicide sous simple agitation une émulsion aqueuse à PH basique comprenant un agent de filtrage capable d'absorber les rayonnements UV et une ou plusieurs amines stériquement encombrées.

Puis, on ajoute à la composition ainsi obtenue, un ou plusieurs additifs choisis dans le groupe comprenant un agent ignifugeant, un agent luminescent, un agent retardateur de feu, un agent conservateur, un colorant et un hydrofuge.

A titre purement illustratif, cette émulsion aqueuse a un PH de 7,2 à 25°C.

Dans un mode de mise en oeuvre de la présente invention, des essais de vieillissement ont été conduits sur des échantillons de bois traités selon différentes stratégies de protection.

Les échantillons de bois utilisés sont des sections de bois résineux blancs ayant une masse volumique de 400 kg/m³.

Au terme de la période de traitement et de séchage de ces échantillons, chaque échantillon a été exposé à la lumière naturelle du jour à Bordeaux dans le Sud Ouest de la France pendant une année.

La couche externe de finition de chaque échantillon a ensuite été observée et notée selon une échelle variant de 1 à 6 (Tableau 1).

La notation 1 correspond à un film de finition en bon état tandis que la note 6 correspond à un film présentant un vieillissement accéléré et en mauvais état dans les conditions de l'essai.

L'échantillon A a subi une application d'un antioxydant (AES), puis une application d'un produit de traitement fongicide et/ou insecticide, puis une application d'une couche primaire sur base acrylique/alkyde et enfin, une application d'une finition contenant un absorbeur ultraviolet.

L'échantillon B a subi une application d'un antioxydant (AES), puis une application d'un produit de traitement fongicide et/ou insecticide, puis une application d'une couche primaire sur base acrylique/alkyde et enfin, une application d'une finition n'incorporant pas d'absorbeur ultraviolet.

L'échantillon C a subi une application d'un produit de traitement fongicide et/ou insecticide, puis une application d'une couche primaire sur base acrylique/alkyde et enfin, une application d'une finition n'incorporant pas d'absorbeur ultraviolet.

L'échantillon D a subi une application d'un produit de traitement fongicide et/ou insecticide, puis une application d'une couche primaire sur base acrylique/alkyde et enfin, une application d'une finition incorporant un absorbeur ultraviolet.

L'échantillon E a subi une application d'une composition aqueuse de traitement selon l'invention puis une application d'une couche primaire sur base acrylique/alkyde et enfin, une application d'une finition n'incorporant pas d'absorbeur ultraviolet

La composition aqueuse de traitement comprend ici un insecticide, un fongicide, une amine stériquement encombrée telle qu'une amine dérivée du 2,2,6,6-tetramethylpiperidine et un absorbeur UV tel qu'un dérivé de l'hydroxyphenylbenzotriazole, ces derniers additifs représentant 5% pourcents en poids par rapport au poids total de la composition.

La composition aqueuse comporte ici une part d'absorbeur UV pour quatre (4) parts d'amine stériquement encombrée (AES) soit un ratio Absorbeur UV/AES = ¼ (en poids).

Le fongicide est ici une combinaison de matières actives (IPBC [3-lodo-2-propynyl butyl carbamate] / Propiconazole / Tébuconazole) fréquemment employées dans le traitement du bois.

L'insecticide est de la cyperméthrine.

L'échantillon F a subi une application d'une composition aqueuse de traitement telle que décrite ci-dessus puis une application d'une couche primaire sur base acrylique/alkyde et enfin, une application d'une finition incorporant un absorbeur ultraviolet.

La composition aqueuse de traitement est la même que celle décrite pour l'échantillon E.

**TABLEAU I**

| | |
|---|---|
| A | 2 |
| B | 3 |
| C | 6 |
| D | 5 |
| E | 1 |
| F | 1 |
| système | notation |

Cette première expérimentation a démontré les avantages de la présente invention, laquelle donne des résultats améliorés par rapport aux stratégies actuelles de protection contre le vieillissement des bois.

## Revendications

1. Composition aqueuse pour le traitement du bois ou de matériaux dérivés du bois, ladite composition comportant au moins un insecticide et/ou au moins un fongicide,
- elle comprend en outre au moins un agent de filtrage capable d'absorber les rayonnements UV et une ou plusieurs amines stériquement encombrées, **caractérisée en ce que**
- les particules d'insecticide et/ou de fongicide dans ladite composition aqueuse ayant une taille moyenne inférieure à 100 µm, et **en ce que**
- ladite composition est une émulsion aqueuse ou une microémulsion aqueuse.

2. Composition selon la revendication 1, **caractérisée en ce que** ladite au moins une amine stériquement encombrée est choisie parmi les dérivés du 2,2,6,6-tetramethylpiperidine.

3. Composition selon la revendication 1, **caractérisée en ce que** ladite au moins une amine stériquement encombrée a un poids moléculaire inférieur ou égal à 1000 g/mol de manière à migrer de l'intérieur du bois ainsi traité vers la surface externe de ce bois pour renouveler en permanence sa protection.

4. Composition selon l'une quelconque des revendications 1 à 3, **caractérisée en ce que** ledit agent de filtrage est choisi parmi des dérivés de l'hydroxybenzophénone, l'hydroxyphenylbenzotriazole et l'hydroxyphenyltriazine.

5. Composition selon l'une quelconque des revendications 1 à 4, **caractérisée en ce que** le pourcentage de l'ensemble comprenant ledit au moins un agent de filtrage capable d'absorber les rayonnements UV et ladite au moins une amine stériquement encombrée, dans ladite composition est compris entre 0,1 pourcent et 20 pourcents en poids par rapport au poids total de la composition.

6. Composition selon la revendication 5, **caractérisée en ce que** la composition aqueuse comporte une part d'absorbeur UV pour quatre (4) parts d'amine stériquement encombrée.

7. Composition selon l'une quelconque des revendications 1 à 6, **caractérisée en ce que** ladite composition comprend au moins un des éléments suivants : un hydrofuge, un agent ignifuge, un retardateur de feu, un colorant, un agent de conservation, un agent fluorescent pour produire une fluorescence lorsque ladite composition est soumise à un rayonnement lumineux et des combinaisons de ceux-ci.

8. Composition selon l'une quelconque des revendications 1 à 7, **caractérisée en ce qu'**elle comprend au moins un agent tensio-actif, au moins un de ces agents tensio-actifs comprenant l'éther monobutylique de polyéthylène-polypropylène glycol.

9. Procédé de préparation d'une composition aqueuse pour le traitement du bois ou de matériaux dérivés du bois selon l'une quelconque des revendications 1 à 8, **caractérisé en ce qu'**elle comprend une phase de mélange d'une émulsion aqueuse à PH basique comprenant au moins un agent de filtrage capable d'absorber les rayonnements UV et une ou plusieurs amines stériquement encombrées, avec une composition aqueuse comprenant au moins un insecticide et/ou au moins un fongicide, les particules d'insecticide et/ou de fongicide dans ladite composition aqueuse ayant une taille moyenne inférieure à 100 µm.

10. Procédé selon la revendication 9, **caractérisé en ce qu'**on réalise les étapes suivantes pour préparer ladite composition aqueuse comprenant au moins un insecticide et/ou au moins un fongicide :
a) on dissout ou on dilue ledit au moins un insecticide et/ou au moins un fongicide dans un solvant organique, et
b) on ajoute au moins un agent tensio-actif, au moins un de ces agents tensio-actifs comprenant l'éther monobutylique de polyéthylène-polypropylène glycol.

11. Procédé selon la revendication 10, **caractérisé en ce qu'**à l'étape b), on ajoute un couple d'agents tensio-actifs comprenant l'éther monobutylique de polyéthylène-polypropylène glycol et un agent tensio-actif non ionique.

12. Procédé selon l'une quelconque des revendications 9 à 11, **caractérisé en ce qu'**on réalise ladite phase de mélange à une température inférieure ou égale à 50°C et **en ce que** ladite émulsion aqueuse comprenant au moins un agent de filtrage capable d'absorber les rayonnements UV et une ou plusieurs amines stériquement encombrées, a un PH compris entre 7 et 9.

13. Procédé selon l'une quelconque des revendications 9 à 12, **caractérisé en ce qu'**on incorpore dans une composition aqueuse comprenant au moins un insecticide et/ou au moins un fongicide sous simple agitation de l'émulsion à PH basique comprenant au moins un agent de filtrage capable d'absorber les rayonnements UV et une ou plusieurs amines stériquement encombrées.

14. Utilisation de la composition selon l'une des revendications 1 à 7 pour le traitement du bois.

## Patentansprüche

1. Wässrige Zusammensetzung für die Behandlung von Holz oder Holzwerkstoffen, wobei die Zusammensetzung mindestens ein Insektizid und/oder mindestens ein Fungizid umfasst, und weiterhin mindestens ein Filtermittel, das fähig ist, UV-Strahlen zu absorbieren, sowie ein oder mehrere sterisch gehinderte Amine umfasst, **dadurch gekennzeichnet, dass**
- die Insektizid- und/oder Fungizidteilchen in der wässrigen Zusammensetzung eine mittlere Größe von weniger als 100 µm aufweisen, und dadurch, dass
- es sich bei der Zusammensetzung um eine wässrige Emulsion oder eine wässrige Mikroemulsion handelt.

2. Zusammensetzung nach Anspruch 1, **dadurch gekennzeichnet, dass** das mindestens eine sterisch gehinderte Amin aus den 2,2,6,6-Tetramethylpiperidinderivaten ausgewählt ist.

3. Zusammensetzung nach Anspruch 1, **dadurch gekennzeichnet, dass** das mindestens eine sterisch gehinderte Amin ein Molekulargewicht von weniger oder gleich 1000 g/mol aufweist, so dass es vom Inneren des so behandelten Holzes zur äußeren Oberfläche des Holzes hin wandert, um seine Schutzwirkung ständig zu erneuern.

4. Zusammensetzung nach einem der Ansprüche 1 bis 3, **dadurch gekennzeichnet, dass** das Filtermittel aus den Hydroxybenzophenon-, Hydroxyphenylbenzotriazol- und Hydroxyphenyltriazinderivaten ausgewählt ist.

5. Zusammensetzung nach einem der Ansprüche 1 bis 4, **dadurch gekennzeichnet, dass** der Prozentsatz der Gesamtheit umfassend das mindestens eine Filtermittel, das fähig ist, UV-Strahlen zu absorbieren, und das mindestens eine sterisch gehinderte Amin, in der Zusammensetzung zwischen 0,1 Gewichtsprozent und 20 Gewichtsprozent in Bezug auf das Gesamtgewicht der Zusammensetzung beträgt.

6. Zusammensetzung nach Anspruch 5, **dadurch gekennzeichnet, dass** die wässrige Zusammensetzung einen Teil UV-Absorber pro vier (4) Teile sterisch gehindertes Amin umfasst.

7. Zusammensetzung nach einem der Ansprüche 1 bis 6, **dadurch gekennzeichnet, dass** die Zusammensetzung mindestens eines der folgenden Elemente umfasst: ein Quellschutzmittel, ein Brandschutzmittel, ein Flammenschutzmittel, einen Farbstoff, ein Konservierungsmittel, ein Fluoreszenzmittel, das, wenn die Zusammensetzung Lichtstrahlen ausgesetzt wird, fluoresziert, sowie Kombinationen davon.

8. Zusammensetzung nach einem der Ansprüche 1 bis 7, **dadurch gekennzeichnet, dass** sie mindestens ein Tensid umfasst, wobei mindestens eines der Tenside Polyethylen/Polypropylenglykolmonobutylether umfasst.

9. Verfahren zur Herstellung einer wässrigen Zusammensetzung für die Behandlung von Holz oder Holzwerkstoffen nach einem der Ansprüche 1 bis 8, **dadurch gekennzeichnet, dass** sie eine Mischungsphase aus einer wässrigen Emulsion mit einem basischen pH-Wert, die mindestens ein Filtermittel, das fähig ist, UV-Strahlen zu absorbieren, und ein oder mehrere sterisch gehinderte Amine umfasst, und einer wässrigen Zusammensetzung, die mindestens ein Insektizid und/oder mindestens ein Fungizid umfasst, wobei die Insektizid- und/oder Fungizidteilchen in der wässrigen Zusammensetzung eine mittlere Größe von weniger als 100 µm aufweisen, umfasst.

10. Verfahren nach Anspruch 9, **dadurch gekennzeichnet, dass** man zur Herstellung der wässrigen Zusammensetzung, die mindestens ein Insektizid und/oder mindestens ein Fungizid umfasst, die folgenden Schritte durchführt:
a) man löst oder verdünnt das mindestens eine Insektizid und/oder das mindestens ein Fungizid in einem organischen Lösungsmittel, und
b) man versetzt mit mindestens einem Tensid, wobei mindestens eines dieser Tenside Polyethylen/ Polypropylenglykolmonobutylether umfasst.

11. Verfahren nach Anspruch 10, **dadurch gekennzeichnet, dass** man im Schritt b) mit einem Paar Tenside umfassend Polyethylen/Polypropylenglykolmonobutylether und ein nichtionisches Tensid versetzt.

12. Verfahren nach einem der Ansprüche 9 bis 11, **dadurch gekennzeichnet, dass** man die Mischphase bei einer Temperatur unter oder gleich 50°C erzeugt und dass die wässrige Emulsion, die mindestens ein Filtermittel, das fähig ist, UV-Strahlen zu absorbieren, und ein oder mehrere sterisch gehinderte Amine umfasst, einen pH-Wert zwischen 7 und 9 aufweist.

13. Verfahren nach einem der Ansprüche 9 bis 12, **dadurch gekennzeichnet, dass** man in eine wässrige Zusammensetzung, umfassend mindestens ein Insektizid und/oder mindestens ein Fungizid, unter einfachem Rühren eine Emulsion mit basischem pH-Wert, umfassend mindestens ein Filtermittel, das fähig ist, UV-Strahlen zu absorbieren, und ein oder mehrere sterisch gehinderte Amine, einarbeitet.

14. Verwendung der Zusammensetzung nach einem der Ansprüche 1 bis 7 für die Behandlung von Holz.

## Claims

1. Aqueous composition for the treatment of wood or wood-derived materials, the said composition comprising at least one insecticide and/or at least one fungicide and additionally comprising at least one screening agent capable of absorbing UV radiation and one or more sterically hindered amines, **characterized in that**
- the particles of insecticide and/or of fungicide in the said aqueous composition have a mean size of less than 100 µm, and **in that**
- the said composition is an aqueous emulsion or an aqueous microemulsion.

2. Composition according to Claim 1, **characterized in that** the said at least one sterically hindered amine is chosen from 2,2,6,6-tetramethylpiperidine derivatives.

3. Composition according to Claim 1, **characterized in that** the said at least one sterically hindered amine has a molecular weight of less than or equal to 1000 g/mol, so as to migrate from the inside of the wood thus treated towards the external surface of this wood, in order to continually renew its protection.

4. Composition according to any one of Claims 1 to 3, **characterized in that** the said screening agent is chosen from hydroxybenzophenone, hydroxyphenylbenzotriazole and hydroxyphenyltriazine derivatives.

5. Composition according to any one of Claims 1 to 4, **characterized in that** the percentage of the combination comprising the said at least one screening agent capable of absorbing UV radiation and the said at least one sterically hindered amine, in the said composition, is between 0.1% and 20% by weight, with respect to the total weight of the composition.

6. Composition according to Claim 5, **characterized in that** the aqueous composition comprises one part of UV absorber per four (4) parts of sterically hindered amine.

7. Composition according to any one of Claims 1 to 6, **characterized in that** the said composition comprises at least one of the following components: a water repellent, a flame retardant, a fire retardant, a colourant, a preservative, a fluorescent agent, in order to produce a fluorescence when the said composition is subjected to light radiation, and combinations of these.

8. Composition according to any one of Claims 1 to 7, **characterized in that** it comprises at least one surface-active agent, at least one of these surface-active agents comprising polyethylene/polypropylene glycol monobutyl ether.

9. Process for the preparation of an aqueous composition for the treatment of wood or wood-derived materials according to any one of Claims 1 to 8, **characterized in that** it comprises a phase of mixing an aqueous emulsion at basic pH, comprising at least one screening agent capable of absorbing UV radiation and one or more sterically hindered amines, with an aqueous composition comprising at least one insecticide and/or at least one fungicide, the particles of insecticide and/or of fungicide in the said aqueous composition having a mean size of less than 100 µm.

10. Process according to Claim 9, **characterized in that** the following stages are carried out in order to prepare the said aqueous composition comprising at least one insecticide and/or at least one fungicide:
a) the said at least one insecticide and/or at least one fungicide is dissolved or diluted in an organic solvent, and
b) at least one surface-active agent is added, at least one of these surface-active agents comprising polyethylene/polypropylene glycol monobutyl ether.

11. Process according to Claim 10, **characterized in that**, in stage b), a pair of surface-active agents, comprising polyethylene/polypropylene glycol monobutyl ether and a non-ionic surface-active agent, is added.

12. Process according to any one of Claims 9 to 11, **characterized in that** the said mixing phase is carried out at a temperature of less than or equal to 50°C and **in that** the said aqueous emulsion, comprising at least one screening agent capable of absorbing UV radiation and one or more sterically hindered amines, has a pH of between 7 and 9.

13. Process according to any one of Claims 9 to 12, **characterized in that** emulsion at basic pH, comprising at least one screening agent capable of absorbing UV radiation and one or more sterically hindered amines, is incorporated, with simple stirring, in an aqueous composition comprising at least one insecticide and/or at least one fungicide.

14. Use of the composition according to one of Claims 1 to 7 for the treatment of wood.
